# EUROPÄISCHE PATENTANMELDUNG

(11) **EP 0 896 309 A2**
(43) Veröffentlichungstag der Anmeldung: **10.02.1999**
(21) Anmeldenummer: 98113935.5
(22) Anmeldetag: 24.07.1998
(51) Int. Cl.: G07G 1/00, G07G 3/00

(54) **Verfahren zur Vermeidung von Ladendiebstahl in Selbstbedienungsgeschäften**

(30) Priorität: 07.08.1997 DE 19734152
(71) Anmelder: Wanzl GmbH & Co. Entwicklungs-KG, D-89336 Leipheim (DE)
(72) Erfinder: Wanzl, Rudolf, 89340 Leipheim (DE)

(57) **Zusammenfassung**

Die Erfindung betrifft ein Verfahren zur Vermeidung von Ladendiebstahl in SB-Geschäften, in welchen den Kunden Einkaufswagen zur Aufnahme der Ware und Handscanner zur Abrechnung der Ware leihweise zur Verfügung gestellt werden und wenigstens ein mit einer Schließvorrichtung (6) versehener, vom Einkaufsbereich (5) zum Marktausgang (8) führender Durchgang (4) vorgesehen ist, wobei nach Rückgabe des Handscanners von einer im Durchgang (4) befindlichen Kassenzettelausgabestation (2) ein Kassenzettel ausgegeben wird, mit dem an einer Zahlstelle (3) gezahlt werden kann, jedoch zur Kontrolle nach dem Zufallsprinzip entweder durch den Kassenzettel oder auf andere geeignete Weise ein Hinweis erfolgt, durch den eine Überprüfung der eingekauften Ware mit dem auf dem Kassenzettel ausgewiesenen Betrag gefordert wird und wobei durch die Ausgabe des Hinweises ein Schließen des Durchganges (4) durch die Schließvorrichtung (6) veranlaßt wird.

## Beschreibung

Die Erfindung betrifft ein Verfahren zur Vermeidung von Ladendiebstahl in SB-Geschäften, in welchen den Kunden Einkaufswagen zur Aufnahme der Ware und Handscanner zur Abrechnung der Ware leihweise zur Verfügung gestellt werden und wenigstens ein mit einer Schließvorrichtung versehener, vom Einkaufsbereich zum Marktausgang führender Durchgang vorgesehen ist, wobei nach Rückgabe des Handscanners von einer im Durchgang befindlichen Kassenzettelausgabestation ein Kassenzettel ausgegeben wird, mit dem an einer Zahlstelle gezahlt werden kann, jedoch zur Kontrolle nach dem Zufallsprinzip entweder durch den Kassenzettel oder auf andere geeignete Weise ein Hinweis erfolgt, durch den eine Überprüfung der eingekauften Ware mit dem auf den, Kassenzettel ausgewiesenen Betrag gefordert wird und wobei durch die Ausgabe des Hinweises ein Schließen des Durchganges durch die Schließvorrichtung veranlaßt wird.

Seit einiger Zeit werden zum Einkauf in Selbstbedienungsgeschäften Handscanner bereitgestellt. Der Kunde nimmt sich am Eingang einen Handscanner und scannt jedes Produkt, bevor er es in den Einkaufswagen legt. Hat der Kunde seinen Einkaufsvorgang abgeschlossen, wird der Handscanner an einer Rückgabeeinrichtung zurückgegeben. An diese Rückgabeeinrichtung schließt sich eine Kassenzettelausgabestation an, die nach Abgabe des Handscanners den Kassenzettel ausgibt, mit welchem der Kunde an einer Zahlstelle bezahlen kann. Nach dem Zufallsprinzip oder aus gegebenen, Anlaß werden Kunden hin und wieder aufgefordert, zu einer Kasse zu gehen, an welcher die Ware in bekannter Weise noch einmal einzeln eingescannt oder in die Kasse eingetippt wird. Dies dient allein zur Kontrolle, ob der Kunde alle Waren korrekt eingeseannt hat.
Bei diesem Verfahren zur Vermeidung von Ladendiebstahl in SB-Geschäften hat sich in der Vergangenheit gezeigt, daß manche Kunden, die nach Abgabe ihres Handscanners einen Hinweis zur Überprüfung der eingekauften Ware erhalten haben, wieder in den Laden zurückgehen und die bewußt nicht eingescannte Ware in das Regal zurücklegen, bevor sie dann an die Kasse zum Bezahlen gehen.

Die Aufgabe der Erfindung ist es daher, ein Verfahren zu entwickeln, welches verhindert, daß Kunden, die nach Abgabe des Handscanners einen Hinweis zur Überprüfung der eingekauften Ware erhalten haben, in den Laden zurückgehen können, uni ihre in betrügerischer Absicht in den Korb gelegte Ware in die Regale zurückzulegen.

Als Lösung der Aufgabe wird ein Verfahren gemäß dem Anspruch 1 oder 2 vorgeschlagen.

Die Erfindung hat den Vorteil, daß der Kunde nach der Rückgabe seines Handscanners durch einen Durchgang zur Kassenzettelausgabestation geführt wird. An der Kassenzettelausgabestation erhält er seinen Kassenzettel, mit dem er zur Bezahlung an die Zahlstelle gehen kann. Erhält der Kunde durch den Kassenzettel oder auf andere geeignete Weise einen Hinweis, durch den eine Überprüfung der eingekauften Ware mit dem auf dem Kassenzettel ausgewiesenen Betrag gefordert wird, wird der Durchgang automatisch mit Hilfe einer Schließvorrichtung verschlossen, so daß der Kunde nicht mehr unbemerkt zurück in den Einkaufsbereich gehen kann, uni seine in betrügerischer Weise nicht abgerechneten Waren in die Regale zurückzulegen.

Die Erfindung wird anhand eines Ausführungsbeispieles näher erläutert.

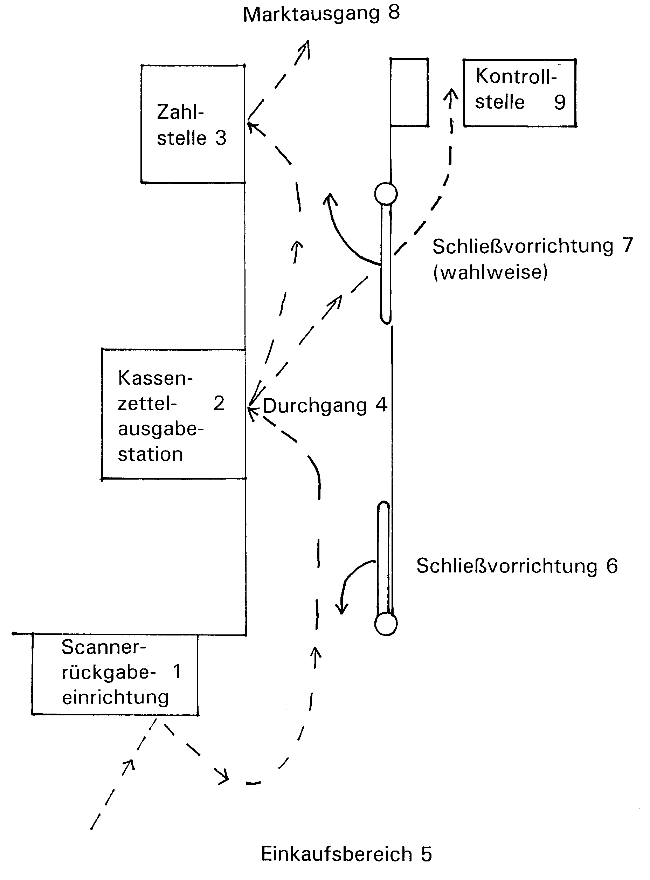

Die Zeichnung zeigt eine Anordnung voll Komponenten zur Vermeidung von Ladendiebstahl in SB-Geschäften. Der Kunde erhält am Eingang des SB-Geschäftes einen Handscanner, mit dem er den Preis der Ware einscannt, bevor er die Ware in seinen Einkaufswagen legt. Hat der Kunde seine Warenauswahl abgeschlossen, geht er in Richtung Marktausgang 8, wo eine Scannerrückgabeeinrichtung 1 angeordnet ist. Dort gibt er seinen Handscanner zurück. Danach geht er in Pfeilrichtung durch den Durchgang 4 zu einer Kassenzettelausgabestation 2, die nach Rückgabe des Handscanners einen Kassenzettel ausgibt. Der Hinweis kann auch ein optisches oder akustisches Signal sein, das sowohl den Kunden als auch das Ladenpersonal darauf aufmerksam macht, daß eine Kontrolle stattzufinden hat. Für die Bezahlung ist eine Zahlstelle 3 vorgesehen, an welche sich der Kunde mit dem Kassenzettel wendet. Nach den, Zufallsprinzip gibt die Kassenzettelausgabestation 2 einen Hinweis aus, die den Kunden zu einer Kontrolle seiner Ware im Einkaufswagen auffordert. Durch die Ausgabe eines solchen Hinweises wird der Durchgang 4 in Richtung Einkaufsbereich 5 mittels einer Schließvorrichtung 6 automatisch verschlossen. Um dies zu verwirklichen ist die Kassenzettelausgabestation 2 zumindest mit der Schließvorrichtung 6 elektrisch geschaltet wobei geeignete Steuerungsmittel Verwendung finden, um z.B. die Dauer des geschlossenen Zustandes des Durchganges festzulegen. Die Sehließvorrichtung 6 kann eine gewöhnliche Schwenktür sein. Sie kann aber auch durch eine Lichtschranke gebildet sein, deren Durchschreiten in der nicht vorbestimmten Richtung ein optisches, akustisches oder anderes wahrnehmbares Signal aktiviert, so daß Ladenpersonal aufmerksam wird. Gleichzeitig kann eine weitere Schließvorrichtung 7 vorgesehen sein, die nach Ausgabe eines Hinweises den Durchgang 4 am Marktausgang 8 verschließt und ein Verlassen des SB-Geschäftes nur über die Kontrollstelle 9 möglich macht, so daß der Kunde gezwungen ist, sich an die Kontrollstelle 9 zu wenden, bevor er bezahlen und das SB-Geschäft verlassen kann. Die weitere Schließvorrichtung 7 kann hierbei ebenso wie die Schließvorrichtung 6 durch eine Lichtschranke gebildet werden, die für kurze Zeit aktiviert wird und deren Durchschreiten ein Signal auslöst.

## Patentansprüche

1. Verfahren zur Vermeidung von Ladendiebstahl in SB-Geschäften, in welchen den Kunden Einkaufswagen zur Aufnahme der Ware und Handscanner zur Abrechnung der Ware leihweise zur Verfügung gestellt werden und wenigstens ein mit einer Schließvorrichtung (6) versehener, vom Einkaufsbereich (5) zum Marktausgang (8) führender Durchgang (4) vorgesehen ist, wobei nach Rückgabe des Handscanners von einer im Durchgang (4) befindlichen Kassenzettelausgabestation (2) ein Kassenzettel ausgegeben wird, mit dem an einer Zahlstelle (3) gezahlt werden kann, jedoch zur Kontrolle nach dein Zufallsprinzip entweder durch den Kassenzettel oder auf andere geeignete Weise ein Hinweis erfolgt, durch den eine Überprüfung der eingekauften Ware mit dem auf dem Kassenzettel ausgewiesenen Betrag gefordert wird und wobei durch die Ausgabe des Hinweises ein Schließen des Durchganges (4) durch die Schließvorrichtung (6) veranlaßt wird.

2. Verfahren zur Vermeidung von Ladendiebstahl in SB-Geschäften, in welchen den Kunden Einkaufswagen zur Aufnahme der Ware und Handscanner zur Abrechnung der Ware leihweise zur Verfügung gestellt werden und wenigstens ein mit einer Schließvorrichtung (6) versehener, vom Einkaufsbereich (5) zum Marktausgang (8) führender Durchgang (4) vorgesehen ist, wobei nach Rückgabe des Handscanners von einer im Durchgang (4) befindlichen Kassenzettelausgabestation (2) ein Kassenzettel ausgegeben wird, mit dem an einer Zahlstelle (3) gezahlt werden kann, jedoch zur Kontrolle nach dem Zufallsprinzip entweder durch den Kassenzettel oder auf andere geeignete Weise ein Hinweis erfolgt, durch den eine Überprüfung der eingekauften Ware mit den, auf den, Kassenzettel ausgewiesenen Betrag gefordert wird und wobei durch die Ausgabe des Hinweises eine Lichtschranke aktiviert wird, die nach unerlaubtem Durchschreiten ein optisches, akustisches oder ein anderes wahrnehmbares Signal auslöst.

3. Verfahren nach Anspruch 1 oder 2, dadurch **gekennzeichnet**, daß durch die Ausgabe des Hinweises ein zusätzliches Schließen des Durchganges (4) am Marktausgang (8) veranlaßt wird.

4. Verfahren nach Anspruch 1 oder 2, dadurch **gekennzeichnet**, daß durch die Ausgabe des Hinweises eine Lichtschranke aktiviert wird, die nach unerlaubtem Durchschreiten ein optisches, akustisches oder ein anderes wahrnehmbares Signal auslöst.
